# EUROPÄISCHE PATENTSCHRIFT

(11) **EP 0 464 192 B1**
(45) Veröffentlichungstag und Bekanntmachung des Hinweises auf die Patenterteilung: **15.06.1994**
(21) Anmeldenummer: 91903712.7
(22) Anmeldetag: 17.01.1991
(51) Int. Cl.: E02F 3/40, E02F 3/96

(54) **SCHNELLKUPPLUNG EINES ARBEITSVORSATZES AN BAGGERN**
QUICK-ACTION COUPLING FOR EXCAVATOR ATTACHMENT
ACCOUPLEMENT RAPIDE D'UN ACCESSOIRE A UNE PELLE MECANIQUE

(30) Priorität: 24.01.1990 DE 9000721 U
(43) Veröffentlichungstag der Anmeldung: 08.01.1992
(73) Patentinhaber: NAGLER, Jürgen, D-58313 Herdecke (DE)
(72) Erfinder: NAGLER, Jürgen, D-58313 Herdecke (DE)
(74) Vertreter: Patentanwälte Meinke, Dabringhaus und Partner
(86) Internationale Anmeldenummer: EP9100073
(87) Internationale Veröffentlichungsnummer: WO9111565

(56) Entgegenhaltungen:
- EP-A- 0 143 074
- EP-A- 0 353 454
- DE-A- 3 018 831
- FR-A- 2 631 052
- GB-A- 1 545 861
- US-A- 4 136 792

## Beschreibung

Die Erfindung richtet sich auf eine Vorrichtung zur Schnellkupplung eines Arbeitsvorsatzes an Baggern nach dem Oberbegriff des Anspruches 1. Oberbegriffsbildend geht die Erfindung aus von der GB-A-1 545 861. Dort wird nach Zusammenfügen zweier korrespondierender Platten, wobei eine Platte Durchbrüche aufweist, zum Durchtritt hakenförmiger Ansätze an der anderen Platte eine Verriegelung dadurch erreicht, daß hinter die Haken jeweils individuell rotierbare Sperrbolzen eingelegt werden, die mit einer dazu parallel verlaufenden Handhabungsstange verbunden sind. Bei rauhen Arbeiten kann nicht ausgeschlossen werden, daß diese Sperrbolzen verloren gehen und damit die Verbindung sich öffnen kann.

Bei den heutigen zum Einsatz kommenden Baggern, beispielsweise Hydraulikbaggern, ist man bemüht, dem Benutzer eine möglichst breite Vielfalt an Einsatzmöglichkeiten mit einem Arbeitsgerät zu ermöglichen, so daß die Ausleger der Bagger so gestaltet sind, daß Arbeitsvorsätze dort ausgewechselt werden können. So können die Baggerlöffel ausgewechselt werden gegen zwei Schalengreifer, gegen Hydraulikgreifer, gegen Hydraulikhämmer, gegen Vakuumheber u. dgl. mehr, um nur einige der Möglichkeiten anzugeben.

Eine Vorrichtung zur Kupplung beim Aufnehmen und Wechseln eines Arbeitsvorsatzes ist beispielsweise aus der WO-A-83/03629 bekannt. Hier erfolgt die Verbindung von Baggerausleger und Arbeitsgerät durch jeweils am Arbeitsgerät und Baggerausleger angeordnete Kupplungsplatten. Die am Arbeitsgerät angeordnete Kupplungsplatte ist mit verschiedenen als Ansätze ausgebildeten Rastausnehmungen versehen, in die zur Aufnahme des Arbeitsgerätes mit der Kupplungsplatte des Baggerauslegers verbundene, verschieden geformte Rastelemente eingreifen. Mindestens ein Teil dieser Rastelemente ist zur Einführung in die korrespondierenden Rastansätze, die mit entsprechenden Bohrungen zum formschlüssigen Eingriff der Rastelemente versehen sind, um eine Achse beweglich ausgebildet und durch den Fahrer vom Fahrersitz aus positionierbar.

Der Kupplungsvorgang wird weiterhin dadurch unterstützt, daß, sobald eine an der Kupplungsplatte des Baggerauslegers vorgesehene Öffnung einen an der Kupplungsplatte des Arbeitsgerätes angeordneten Sperriegelansatz umgreift, ein beweglicher, an der Kupplungsplatte des Baggerauslegers angeordneter Sperriegel, über eine hydraulische oder mechanische Vorrichtung, in den Sperriegelansatz gedrückt wird, solange, bis alle Rastelemente fest in den korrespondierenden Rastansätzen eingerastet sind. Nun sind der Baggerausleger und das Arbeitsgerät fest miteinander verbunden.

Eine derartige Kupplungsvorrichtung weist einige schwerwiegende Nachteile auf. Zum einen können, wenn z.B. Schotter oder Erde die Bohrungen der Rastansätze verstopfen, die Rastelemente nur mit einem großen Kraftaufwand, der über das Zusammenspiel von Sperriegel und Sperriegelansatz auf die Rastelemente übertragen wird, in die Rastansätze gedrückt werden. Zum anderen greift bei der Aufnahme des Arbeitsgerätes durch den Baggerausleger eine durch die Last erzeugte Kraft am Sperriegelelement und Sperriegelansatz an. Beides führt zu einer schnellen Abnutzung und Funktionsuntüchtigkeit der Verriegelungselemente. Diese einzelnen Teile müssen daher häufig ausgewechselt werden, was sehr zeitaufwendig und kostenintensiv ist.

Kupplungseinrichtungen auf dem hier interessierenden Gebiet sind auch aus der US-A-4 136 732, der EP-A-0 143 074, der FR-A-2 631 052, der EP-A-0 353 454 oder der DE-A-30 18 831 bekannt.

Aufgabe der Erfindung ist insbesondere die Schaffung einer Lösung, mit der die Folgen von Verschleißerscheinungen an den Verriegelungselementen bei der Kupplung zum Aufnehmen und Wechseln eines Arbeitsvorsatzes für einen Baggerausleger stark verringert werden können, wobei gleichzeitig eine schnelle Ankupplung des Arbeitsgerätes an den Baggerausleger gewährleistet bleiben soll.

Mit einer Vorrichtung der eingangs bezeichneten Art wird diese Aufgabe gemäß der Erfindung dadurch gelöst, daß die hakenförmigen Rastelemente mit sich keilförmig zu ihrem Hakenschaft hin verjüngenden Ansätzen versehen sind, die derart ausgebildet sind, daß in der Rastlage eine zusätzliche Klemmwirkung zwischen den Rastelementen und der korrespondierenden Kupplungsplatte erzielbar ist und daß das Sperrelement während der Kupplungsstellung in wenigstens eine der Rastausnehmungen der Kupplungsplatte eingreift.

Durch die erfindungsgemäße Ausbildung wird eine optimale Klemmwirkung erzielt, wobei auch bei Verschleiß der miteinander korrespondierenden Elemente gewährleistet ist, daß eine entsprechende Klemmung aufrechterhalten wird. Dadurch, daß das Sperrelement in den Öffnungsquerschnitt der Rastausnehmungen eingreift und sich in dieser Öffnung verklemmt, greifen an das Sperrelement keine Lastkräfte oder Kräfte an, die zur Ankopplung notwendig wären, weshalb kaum noch benutzungsbedingte Verschleißerscheinungen an den Verriegelungselementen auftreten und wodurch gleichzeitig eine schnelle Ankopplung des Arbeitsgerätes an den Baggerausleger möglich ist.

Damit erfüllt die Erfindung insbesondere folgende Anforderungen:
Eine feste und dauerhaft spielfreie Verklammerung mit allen in Frage kommenden Ausrüstungsteilen ist gewährleistet, ein eventuell auftretender Verschleiß wird ohne Montageaufwand ausgeglichen,
eine Betätigung und Handhabung ist vom Fahrersitz möglich,
es entstehen keine oder nur geringe Veränderungen der Löffelkinematik, d.h. der Löffeldrehpunkt liegt nahe bei der normalen Bolzenbefestigung, max. Vorbau ca. 100-120 mm, so daß die Reiß- und Brechkräfte nicht wesentlich verringert werden.

Durch ein geringes Gewicht werden Nutzlast-Einbußen vermieden, wobei gleichzeitig eine uneingeschränkte Um- und Nachrüstungsmöglichkeit an vorhandenen Geräte und Ausrüstungen erreicht wird.

Eine Greiferbenutzung ist mit der Schnellwechseleinrichtung uneingeschränkt möglich, wobei die Schnellverbindung unabhängig vom Baggerhersteller in den einzelnen Gewichtsklassen einheitliche Anschlußmaße bietet, damit alle Ausrüstungsteile auch an jeden Bagger passen.

Vorteilhafte Ausführungsvarianten der Erfindung ergeben sich aus den Unteransprüchen.

Eine Ausführungsvariante der Erfindung ist durch die an einem in der Sperrlage mechanisch sicherbaren Schwenkhebeltrieb angeordneten Sperrelemente gegeben. Dieses läßt sich beispielsweise durch einfache Stecksicherungen mit Sicherungsblenden oder dgl. erreichen. Der Schwenkhebeltrieb kann in einfacher Weise durch den Baggerführer vom Fahrersitz aus bedient werden.

Um die Klemmwirkung zu verstärken oder zu verbessern, kann auch vorgeseshen sein, daß unter der mit den Rastausnehmungen versehenen Kupplungsplatte Auflager für die Ansätze der Rastelemente vorgesehen sind.

Eine andere Ausführungsvariante der Erfindung zeichnet sich dadurch aus, daß das in einer Ebene bewegliche Sperrelement in Sperrichtung mechanisch, hydraulisch oder elektrisch beaufschlagt ist und/oder, daß die Kupplungsplatte an mindestens einer Kante der Rastausnehmung wenigstens eine Fläche aufweist, die an wenigstens einer Fläche des Sperrelementes während der Kupplungsstellung anliegt, die zur Bildung einer Keilwirkung ausgebildet sind.

Hierbei ist es vorteilhaft, daß nur wenige konstruktiv einfache Elemente zur Erzeugung der Verriegelung notwendig sind. Dazu kann beispielsweise ein keilförmiges Sperrelement, das in einem Langloch in der am Baggerausleger angeordneten Kupplungsplatte verschiebbar angeordnet ist, gegen einen korrespondierenden entsprechend keilförmig gestalteten Öffnungsausschnitt in der Rastausnehmung verklemmt werden. Weitere Vorteile bestehen auch noch darin, daß keine Auflager in den Rastausnehmungen nötig sind und daß die hakenförmigen Rastelemente keine spezielle, den Auflagern und dem Sperriegel angepaßte Form aufweisen müssen.

Die Erfindung ist nachstehend anhand der Zeichnung beispielsweise näher erläutert. Diese zeigt in
- Fig. 1: eine vereinfachte räumliche Darstellung eines Teiles eines Auflagers mit einem Teil eines Arbeitsgerätes kurz vor dem Zusammenkuppeln,
- Fig. 2: in räumlicher, vereinfachter Darstellung eine Kupplungsplatte mit Sperrelement,
- Fig. 3: eine Seitenansicht, teilweise aufgebrochen, der erfindungsgemäßen Vorrichtungen,
- Fig. 4: eine vereinfachte räumliche Darstellung einer anderen Ausführung eines Teiles eines Auflagers mit einem Teil eines Arbeitsgerätes kurz vor dem Zusammenkuppeln mit zueinander versetzter Perspektive,
- Fig. 5: eine Aufsicht auf die Kupplungsplatte am Arbeitsgerät nach dem Ausführungsbeispiel in Fig. 4 und in
- Fig. 6: eine Aufsicht auf die Kupplungsplatte am Raggerausleger nach der Ausführungsbeispiel in Fig. 4.

An einem allgemein mit 1 bezeichneten freien Ende eines Baggerauslegers 2 und an einem allgemein mit 3 bezeichneten Baggerlöffel ist die zweiteilige, erfindungsgemäße Vorrichtung angebracht. Dabei besteht die Schnellkupplungsvorrichtung gemäß der Erfindung aus einer ersten Kupplungsplatte 4 und einer zweiten Kupplungsplatte 4a, die in der Kupplungslage aneinander anliegen, wobei die Kupplungsplatte 4 über seitliche, mit 5 bezeichnete Montageflansche über eine bekannte Bolzen/Steckverbindung 6 am freien Ende 1 des Baggerauslegers 2 angeschlagen ist.

Im dargestellten Beispiel ist die Kupplungsplatte 4a am Baggerlöffel 3 über seitliche Flanschelemente 5a verschweißt, ohne daß die Erfindung auf diese Befestigungsart beschränkt wäre, hier kann ebenfalls eine Bolzenverbindung oder eine vergleichbare lösbare Verbindung vorgesehen sein.

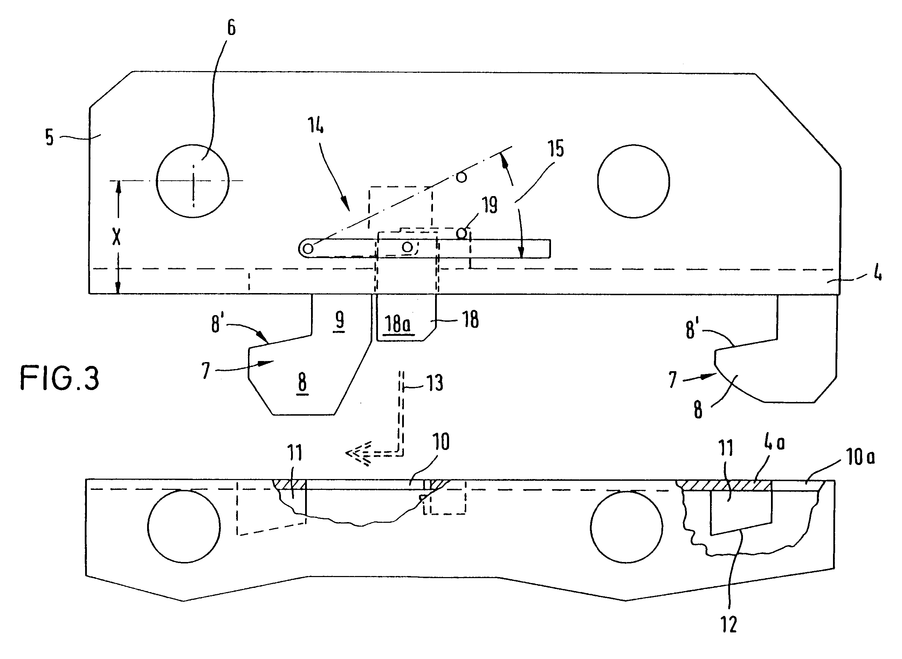

Im dargestellten Beispiel ist die am Baggerausleger 2 angeschlagene Kupplungsplatte 4 mit an ihrer Unterseite vier hakenförmigen Nocken 7 mit hakenförmigen Ansätzen 8 ausgerüstet, deren Untergriffsfläche, in Fig. 3 mit 8' bezeichnet, derart angeschrägt ist, daß sich der wirksame Eingriffsspalt zum Schaft 9 der Eingriffsnocken 7 hin verjüngt.

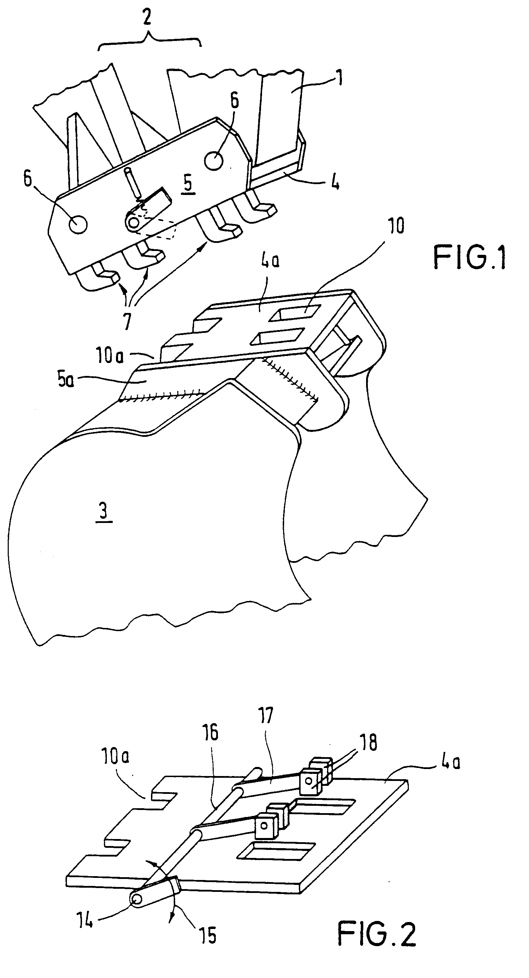

Die korrespondierende Kupplungsplatte 4a ist mit zwei Rastausnehmungen 10 im vorderen Bereich versehen und im rückwärtigen Bereich mit zwei randseitig offenen Rastausnehmungen 10a, wie sich beispielsweise aus den Fig. 1 bzw. 2 ergibt. Auf der Unterseite ist die Kupplungsplatte 4a unmittelbar anschließend an die Rastausnehmungen 10 mit Auflagern 11 versehen, die mit einer Auflaufschräge 12 ausgerüstet sind, die mit der schrägen Eingriffsfläche 8' an den Nockenansätzen 8 in der Eingriffslage korrespondiert.

Die Kupplungsbewegung, aufgeteilt in ihre beiden Kupplungsrichtungen, ist mit dem Doppelpfeil 13 in Fig. 3 angegeben. Sind die Rastnocken 7 in die Rastausnehmungen 10 bzw. 10a eingefahren und in Arbeitsrichtung nach vorne verschoben, derart, daß die Klemmschrägen 8 bzw. 11 die Kupplungsplatten 4 und 4a gegeneinander erspannen, wird zur Sicherung ein allgemein mit 14 bezeichneter Schwenkhebeltrieb gemäß gestricheltem Pfeil 15 in Fig. 2 verschwenkt. Dabei sind an einer Welle 16 zwei Schwenkhebel 17 mit je einem Paar von Sperrelementen 18 angeordnet.

Diese Sperrelemente 18 werden mit ihrem unteren, in Fig. 3 mit 18a bezeichneten Bereich in den freien Teilen der Rastausnehmungen 10 nach der Kupplung eingeschwenkt, der Schwenkhebeltrieb 14 wird dann etwa durch eine Splintsicherung an einem Bolzen 19 verriegelt, was in Fig. 3 lediglich angedeutet ist. Erkennbar kann dann der Rastnocken 7 bzw. dessen Schaft 9 nicht mehr aus der Rastausnehmung 10 ausgezogen werden.

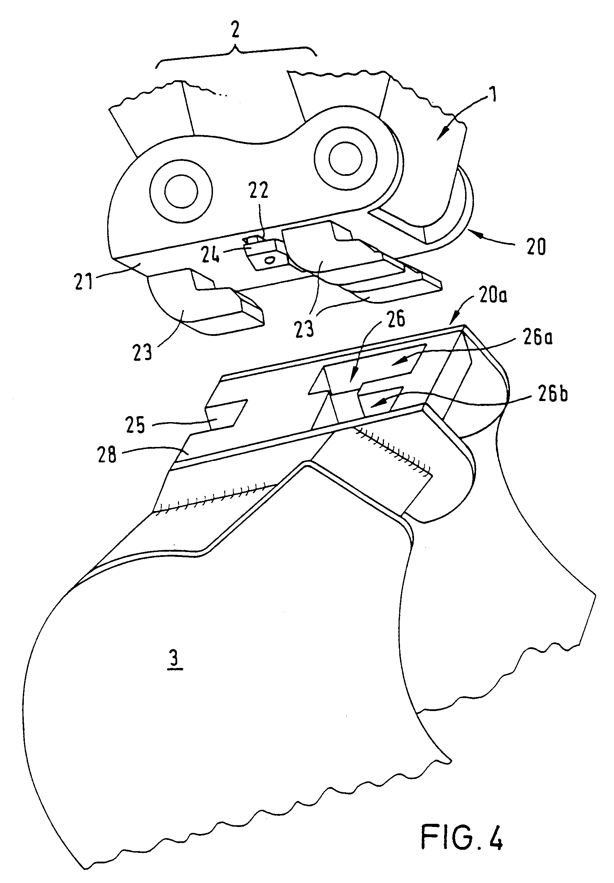

Eine Ausführungsvariante nach der Erfindung ist in Fig. 4, 5 und 6 gezeigt. Im folgenden werden nur die im Vergleich zur ersten Ausführungsform unterschiedlichen Merkmale dieser Vorrichtung beschrieben und erläutert, wobei soweit wie möglich die gleichen Bezugzeichen benutzt werden wie bei dem Beispiel nach Fig. 1.

Am Ende des Baggerauslegers 2 ist eine Kupplungsplatte 20 und am Baggerlöffel 3 eine Kupplungsplatte 20a angeordnet. Die Kupplungsplatte 20 weist an ihrer Unterseite 21 die als Rastnocken ausgebildeten, hakenförmigen Rastelemente 23 auf. Ein Sperrelement 24 ist im Langloch 22 verschiebbar angeordnet. Die Kupplungsplatte 20a weist an ihrem einen Ende eine seitlich offene Rastausnehmung 25 und eine verzweigte Rastausnehmung 26, die nach allen Seiten begrenzt und in die Abschnitte 26a und 26b gegliedert ist, auf.

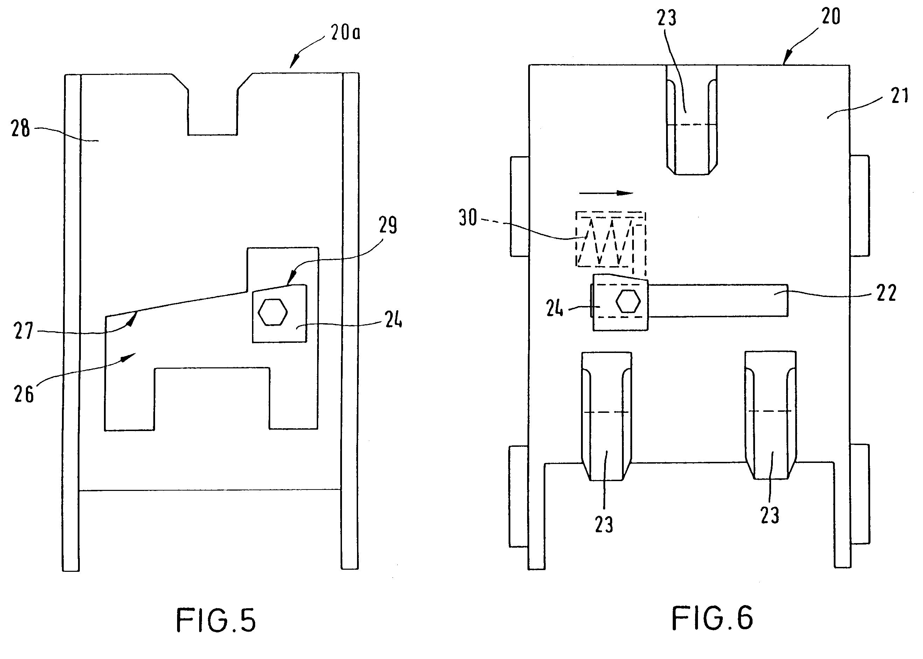

Zum Verständnis der Kupplungs-und Verriegelungsweise sind zusätzlich Fig. 5 und 6 zu betrachten, die in einer Draufsicht, die in Kupplungslage aneinanderliegenden Kupplungsplatten 20 und 20a mit den in der Kupplungslage aneinanderliegenden Kupplungsplattenseiten 21 und 28 zeigen. Insbesondere aus Fig. 5 ist die zur Klemmwirkung angeordnete Führungskante 27 in der Rastausnehmung 26 der Kupplungsplatte 20a und die damit korrespondierende Klemmfläche 29 des Sperrelementes 24 zu ersehen. Fig. 6 zeigt insbesondere das Langloch 25 mit dem Sperrelement 24 und die Rastnocken 23.

Die Kupplung und die Verriegelung ergibt sich wie folgt:

Zuerst greifen die Rastelemente 23 in die Rastausnehmung 25 und 26 ein. Liegen die Kupplungsplatten 20 und 20a aneinander, wird der Sperriegel 24 längs des Langloches 22 über eine Feder 30 oder eine hvdraulische Einrichtung bewegt und mit seiner Klemmfläche 29 entlang der schrägen Führungskante 27 in der Rastausnehmung 26 der Kupplungsplatte 20a soweit verschoben, bis sich der Sperriegel in der Rastausnehmung 26 verklemmt. Der Raggerausleger und das Arbeitsgerät sind nun fest miteinander verbunden.

Statt der vier Rastnocken können eine größere oder kleinere Anzahl vorgesehen sein, die Ausbildung der Rastnocken an den Platten mit Eingriffsöffnungen kann auch umschlaosymmetrisch gleich sein, jede der Platten trägt sowohl ein Paar Rastnocken als auch ein Paar Rastausnehmungen. Auch ist es erfindungsgemäß möglich, die Haken bzw. Ausnehmungen gegenüber der hier beschriebenen Ausführungsvariante umzudrehen, um das Kupplungssystem auch für Schaufellader einsetzbar zu machen, bei denen die Lastaufnahme in entgegengesetzter Richtung wirkt, als beispielsweise bei einem Baggerarbeitsgerät.

## Patentansprüche

1. Vorrichtung zur Schnellkupplung eines Arbeitsvorsatzes an Baggern, insbesondere zur Schnellkupplung von Baggerlöffeln, die aus zwei Kupplungsplatten (4,4a,20,20a) am freien Ende (1) des Baggerauslegers (2) einerseits und am Arbeitsgerät (3) andererseits besteht, wobei hakenförmige Rastelemente (7,23), die an der einen Kupplungsplatte (4,20) angeordnet sind, in Rastausnehmungen (10,25,26), die an der anderen Kupplungsplatte (4a,20a) vorgesehen sind, zur Kupplung und während einer Kupplungsstellung eingreifen, und wobei zur Sicherung der Kupplungsstellung wenigstens ein Sperrelement (14,24) an einer der Kupplungsplatten (4,20) vorgesehen ist,
dadurch gekennzeichnet,
daß die hakenförmigen Rastelemente (7) mit sich keilförmig zu ihrem Hakenschaft (9) hin verjüngenden Ansätzen (8) versehen sind, die derart ausgebildet sind, daß in der Rastlage eine zusätzliche Klemmwirkung zwischen den Rastelementen (7) und der korrespondierenden Kupplungsplatte (4a) erzielbar ist und daß das Sperrelement (18,24) während der Kupplungsstellung in wenigstens eine der Rastausnehmungen (10,25,26) der Kupplungsplatte (4a,20a) eingreift.

2. Vorrichtung nach Anspruch 1,
dadurch gekennzeichnet,
daß unter der mit den Rastausnehmungen (10,10a) versehenen Kupplungsplatte (4a) Auflager (11) für die Ansätze (8) der Rastelemente (7) vorgesehen sind.

3. Vorrichtung nach Anspruch 1 oder 2,
dadurch gekennzeichnet,
daß die Sperrelemente (18) an einem in der Sperrlage mechanisch sicherbaren Schwenkhebeltrieb (14) angeordnet sind.

4. Vorrichtung nach Anspruch 1, 2 oder 3,
dadurch gekennzeichnet,
daß das in einer Ebene bewegliche Sperrelement (24) in Sperrichtung mechanisch, hydraulisch oder elektrisch beaufschlagt ist und/oder daß die Kupplungsplatte (20a) an mindestens einer Kante der Rastausnehmungen (25,26) wenigstens eine Fläche (27) aufweist, die an wenigstens einer Fläche (29) des Sperrelementes (24) während der Kupplungsstellung anliegt, die zur Bildung einer Keilwirkung ausgebildet sind.

5. Vorrichtung nach einem der vorangehenden Ansprüche,
dadurch gekennzeichnet,
daß an unterschiedlich anzukoppelnden Werkzeugen (3) gleiche adapterartige Kupplungsplatten (4a,20a) vorgesehen sind.

## Claims

1. Apparatus for quick coupling of a working attachment to excavators, in particular for quick coupling of excavator buckets, which comprises two coupling plates (4, 4a, 20, 20a) at the free end (1) of the excavator jib (2) on the one hand and on the working implement (3) on the other hand, wherein hook-shaped retaining elements (7, 23) which are arranged on the one coupling plate (4, 20) engage into retaining openings (10, 25, 26) which are provided on the other coupling plate (4a, 20a), for coupling purposes and during a coupling position, and wherein at least one locking element (14, 24) is provided on one of the coupling plates (4, 20) for securing the coupling position, characterised in that the hook-shaped retaining elements (7) are provided with projections (8) which taper in a wedge shape towards their hook shank portion (9) and which are of such a configuration that in the retaining position an additional clamping effect can be produced between the retaining elements (7) and the corresponding coupling plate (4a) and that during the coupling position the locking element (18, 24) engages into at least one of the retaining openings (10, 25, 26) of the coupling plate (4a, 20a).

2. Apparatus according to claim 1 characterised in that supports (11) for the projections (8) of the retaining elements (7) are provided under the coupling plate (4a) which has the retaining openings (10, 10a).

3. Apparatus according to claim 1 or claim 2 characterised in that the locking elements (18) are arranged on a pivotal lever actuating means (14) which can be mechanically secured in the locking position.

4. Apparatus according to claim 1, claim 2 or claim 3 characterised in that the locking element (24) which is movable in a plane is mechanically, hydraulically or electrically actuated in the locking direction and/or that the coupling plate (20a) has at at least one edge of the retaining openings (25, 26) at least one surface (27) which bears against at least one surface (29) of the locking element (24) during the coupling position, which surfaces are designed to produce a wedge effect.

5. Apparatus according to one of the preceding claims characterised in that identical adaptor-like coupling plates (4a, 20a) are provided on tools (3) which are to be coupled in position in different ways.

## Revendications

1. Dispositif d'accouplement rapide d'un outil de travail sur des pelles mécaniques, notamment d'accouplement rapide de pelles de pelleteuses mécaniques, qui est constitué par deux plaques d'accouplement (4, 4a, 20, 20a) à l'extrémité libre (1) de la flèche (2) de la pelle mécanique d'une part et sur l'outil de travail (3) d'autre part, des éléments d'enclenchement en forme de crochets (7, 23) qui sont montés sur l'une des plaques d'accouplement (4, 20) étant introduits dans des évidements d'enclenchement (10, 25, 26) prévus dans l'autre plaque d'accouplement (4a, 20a) en vue de l'accouplement et pendant la position d'accouplement, et au moins un élément de blocage (18, 24) étant prévu sur l'une des plaques d'accouplement (4, 20) pour assurer la position d'accouplement,
caractérisé en ce que
les éléments d'enclenchement en forme de crochets (7) sont munis de saillies en forme de coin (8) allant en se réduisant en direction de leur tige (9), qui sont constituées de manière que dans la position d'enclenchement puisse être obtenu un effet de serrage additionnel entre les éléments d'enclenchement (7) et la plaque d'accouplement correspondante (4a), et en ce que l'élément de blocage (18, 24) pénètre dans au moins l'un des évidements d'enclenchement (10, 25, 26) de la plaque d'accouplement (4a, 20a) pendant la position d'accouplement.

2. Dispositif selon la revendication 1, caractérisé en ce que des appuis (11) destinés aux parties en saillie (8) des éléments d'enclenchement (7) sont prévus sous la plaque d'accouplement (4a) munie des évidements d'enclenchement (10, 10a).

3. Dispositif selon la revendication 1 ou 2, caractérisé en ce que les éléments de blocage (18) sont montés sur un mécanisme à levier pivotant (14) pouvant être fixé mécaniquement dans la position de blocage.

4. Dispositif selon la revendication 1, 2 ou 3, caractérisé en ce qu'un élément de blocage (24) mobile dans un plan est sollicité mécaniquement, hydrauliquement ou électriquement en direction du blocage et/ou en ce que la plaque d'accouplement (20a) comprend au moins sur un bord des évidements d'enclenchement (25, 26) au moins une surface (27) qui s'applique contre au moins une surface (29) de l'élément de blocage (24) dans la position d'accouplement, surface qui est constituée pour avoir un effet de coin.

5. Dispositif selon l'une quelconque des revendications précédentes, caractérisé en ce que des plaques d'accouplement (4a, 20a) similaires et adaptables sont prévues sur des outils de travail divers (3) à accoupler.
